# EUROPEAN PATENT APPLICATION

(11) **EP 1 655 152 A1**
(43) Date of publication of application: **10.05.2006**
(21) Application number: 05023545.6
(22) Date of filing: 27.10.2005
(51) Int. Cl.: B60C 23/04

(54) **Apparatus for sensing tire information, reducing distortion of amplitude-modulated wave**

(30) Priority: 09.11.2004 JP 2004325466
(71) Applicant: ALPS ELECTRIC CO., LTD., Tokyo 145-8501 (JP)
(72) Inventor: Iijima, Kota, Otsuka-cho Ota-ku Tokyo 145-8501 (JP)
(74) Representative: Klunker . Schmitt-Nilson . Hirsch

(57) **Abstract**

An apparatus for sensing tire information including information about tire pressure includes an interrogator for transmitting an interrogation signal to a vicinity of a tire of a vehicle in a transmission period and for receiving and processing a response signal including the tire information in a reception period and a transponder attached to the tire. The transponder includes a sensor for sensing the tire information and a second mixing unit for mixing first and second signals and outputting a difference signal having a frequency equal to a difference in frequency between the first and second signals. The interrogator includes a power combining circuit for combining the first and second signals. The first signal is different from the second signal by a predetermined frequency that can excite the sensor. In the transmission period, a combined signal of the first and second signals is transmitted from an antenna of the interrogator.

## Description

### BACKGROUND OF THE INVENTION

### 1. Field of the Invention

The present invention relates to an apparatus for sensing tire information to monitor tire pressure or the like.

### 2. Description of the Related Art

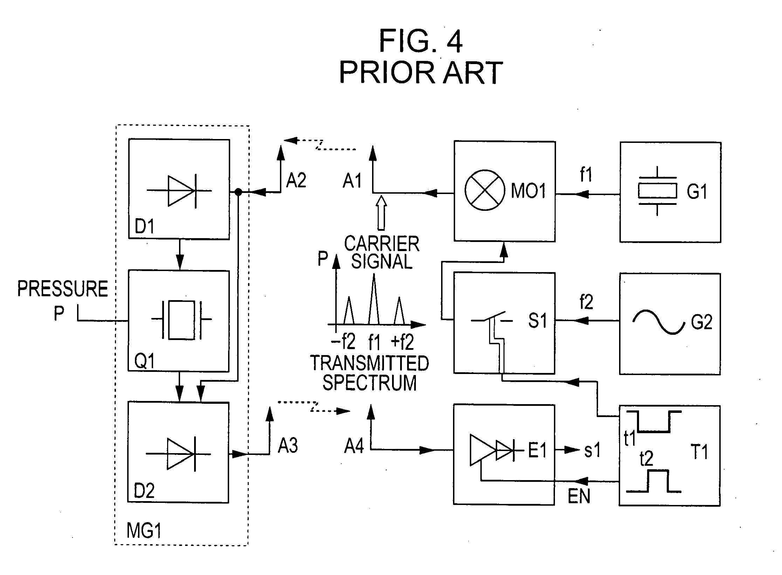

A conventional apparatus for sensing tire information is described with reference to Fig. 4. A controller contains at least one radio-frequency generator G1 for a carrier signal f1, preferably in the microwave frequency band around 2.4 GHz, which is modulated by at least one lower-frequency signal f2, produced by a generator G2, preferably in the frequency band from 1 to 30 MHz. This modulation results in the required supply frequencies being produced. The resultant signal is amplified and is emitted via an antenna A1 in the vicinity of a tire.

The modulation is preferably amplitude modulation.
According to such modulation forms, further sidebands are produced in the spectrum to the left and right alongside the carrier frequency, specifically, for example, at f1+f2 and f1-f2 for amplitude modulation. If a plurality of frequencies f2 are used, their sum results in a sideband spectrum which is illustrated, using an example, in the drawing. The modulation can be switched off by an electronic switch S1, and the switch is controlled cyclically by a timer T1.

The tire contains at least one measured value transmitter MG1 (transponder), including at least one antenna A2, a receiver with at least one diode D1, and a crystal resonator Q1 which is excited by the received modulation signal. The crystal resonator Q1 changes its resonant frequency under the influence of tire pressure and is now itself once again coupled to a modulator diode or mixer diode D2, preferably a varactor diode allowing parametric gain. Furthermore, its frequency is varied by the measured value. The modulation is now switched off by the switch S1 at a time t1, and a receiver E1 is activated shortly after this at a time t2, with t2 following about 1 s after t1.

If the modulation of the supply frequency is now switched off, then the crystal resonator Q1 still continues to oscillate for about 1 ms and, since the carrier is still present, this supply frequency is modulated via the modulator diode D2. However, this occurs only once the modulation frequency f2 has already excited the crystal Q1, that is to say, when the modulation frequency corresponds roughly to the possible measured value. The receiver now sees a modulated signal of an antenna A3 at its antenna A4 without the supply signal being modulated by the antenna A1, which could cause interference, and can thus deduce the measured value from the modulation. In the absence of modulation or if the modulation is too weak, further possible measured values can be sampled iteratively (see, for example, Japanese Patent No. 3,494,440, in particular, Figure 5).

In the transponder MG1, an amplitude-modulated wave is detected by the diode D1, a modulation wave of the lower-frequency signal f2 is detected, and the detected modulation wave excites the crystal resonator Q1. To sufficiently excite the crystal resonator Q1, a large modulation factor for the amplitude-modulated wave is necessary. However, if the modulation factor is made larger in order to facilitate exciting it, the modulation wave becomes largely distorted and spurious radiation occurs. If the modulation factor is reduced in order to avoid the spurious problem, the modulation level is lower and the crystal resonator cannot be sufficiently excited.

### SUMMARY OF THE INVENTION

It is an object of the present invention to avoid a problem resulting from distortion of amplitude-modulated waves output from a controller (interrogator).

An apparatus for sensing tire information including information about tire pressure according to an aspect of the present invention includes an interrogator for transmitting an interrogation signal to a vicinity of a tire of a vehicle in a transmission period and for receiving and processing a response signal including the tire information in a reception period, and a transponder attached to the tire, the transponder including a sensor capable of being excited by a signal having a predetermined frequency, the sensor being used for sensing the tire information, the transponder being for sending the response signal to the interrogator in response to the interrogation signal in the reception period. The interrogator includes a first oscillator for outputting a first signal, a second oscillator for outputting a second signal, the first signal and the second signal being used for constituting the interrogation signal, a frequency of the first signal being different from a frequency of the second signal by the predetermined frequency, a power combining circuit for combining the first signal and the second signal, and an antenna connectable to a combining output terminal of the power combining circuit. The transponder includes a second mixing unit for mixing the first signal and the second signal and outputting a difference signal having a frequency equal to a difference in frequency between the first signal and the second signal. In the transmission period, a combined signal of the first and second signals is transmitted.

As described above, the interrogator includes the first oscillator for outputting the first signal, the second oscillator for outputting the second signal, the first signal and the second signal being used for constituting the interrogation signal, a frequency of the first signal being different from a frequency of the second signal by the predetermined frequency, the power combining circuit for combining the first signal and the second signal, and the antenna connectable to a combining output terminal of the power combining circuit. The transponder includes the second mixing unit for mixing the first signal and the second signal and outputting a difference signal having a frequency equal to a difference in frequency between the first signal and the second signal. In the transmission period, the combined signal of the first and second signals is transmitted. Therefore, merely transmitting the first signal and the second signal from the interrogator enables the transponder to be excited, without transmitting amplitude-modulated waves from the interrogator. As a result, a problem resulting from distortion of amplitude-modulated waves is avoided.

The apparatus described above may further include a first mixing unit connected to an output side of the first oscillator, a bypassing line for bypassing the power combining circuit, a first switching unit for connecting one of a first input terminal of the power combining circuit and the bypassing line to the first mixing unit, and a second switching unit for connecting one of the combining output terminal of the power combining circuit and the bypassing line to the antenna. In the transmission period, inputting to the power combining circuit may be performed via the first mixing unit, and, in the reception period, the response signal may be input to the first mixing unit via the bypassing line, and the first signal may be input to the first mixing unit.

Therefore, the response signal can be demodulated by being synchronously detected by the first mixing unit.

### BRIEF DESCRIPTION OF THE DRAWINGS

Fig. 1 is a circuit diagram of an apparatus for sensing tire information according to an embodiment of the present invention;
Fig. 2 is a circuit diagram of an embodiment of a first mixing unit used in an apparatus for sensing tire information according to an embodiment of the present invention;
Fig. 3 shows a format of an interrogation signal in an apparatus for sensing tire information according to an embodiment of the present invention; and
Fig. 4 is a circuit diagram of a conventional apparatus for sensing tire information.

### DESCRIPTION OF THE PREFERRED EMBODIMENTS

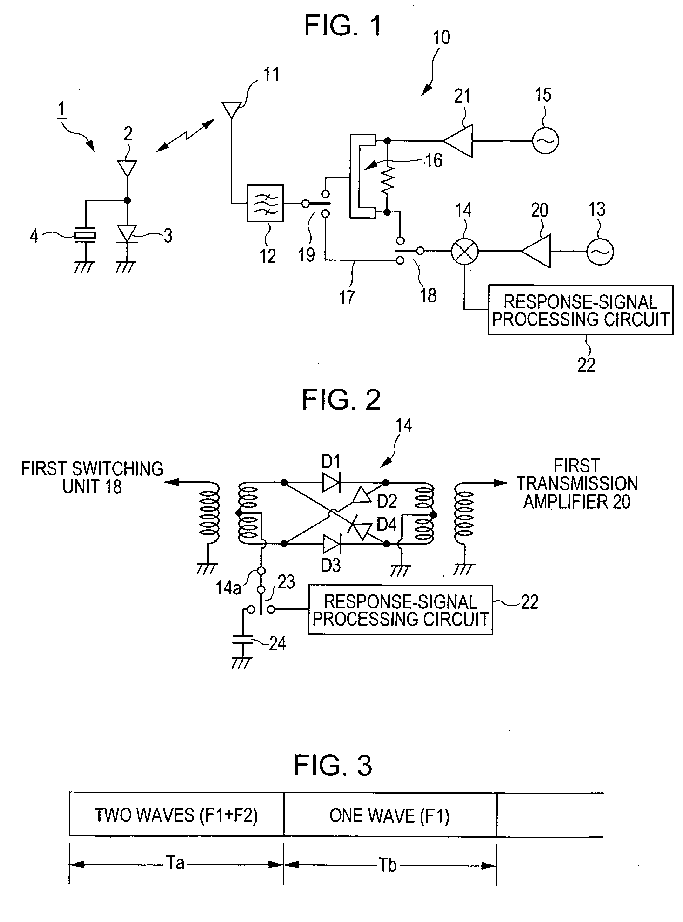

An embodiment of an apparatus for sensing tire information is described below with reference to Figs. 1 to 3. In Fig. 1, a transponder 1 is attached to a tire (not shown) of a vehicle. A main body (not shown) of the vehicle is provided with an interrogator 10.

The transponder 1 includes an antenna 2, a second mixing unit 3 connected to the antenna 2, and a sensor 4 connected to the second mixing unit 3. The second mixing unit 3 is a non-linear device (e.g., a diode) and functions as both a frequency converting unit and a modulating unit. The sensor 4 includes a crystal resonator in which self resonance occurs when excited by a signal having a self-resonant frequency or a frequency close thereto (e.g., about 10 MHz). The resonant frequency varies with tire pressure, temperature, and the like. The number of sensors 4 corresponds to tire information to be sensed, i.e., a plurality of sensors 4 may be used.

The interrogator 10 includes an antenna 11, a band-pass filter 12 connected the antenna 11, a first oscillator 13 for generating a first signal, a first mixing unit 14 disposed at an output side of the first oscillator 13, a second oscillator 15 for generating a second signal, a power combining circuit 16 for combining the first signal and the second signal, a bypassing line 17 for bypassing the power combining circuit 16, a first switching unit 18 for connecting one of the power combining circuit 16 and the bypassing line 17 to the first mixing unit 14 by switching therebetween, and a second switching unit 19 for connecting one of the power combining circuit 16 and the bypassing line 17 to the band-pass filter 12 by switching therebetween.

A first transmission amplifier 20 is disposed between the first oscillator 13 and the first mixing unit 14. A second transmission amplifier 21 is disposed between the second oscillator 15 and the power combining circuit 16. A response-signal processing circuit 22 can be connected to a modulation output terminal 14a of the first mixing unit 14.

As shown in Fig. 2, the first mixing unit 14 is, for example, a bidirectional double-balanced mixer including four diodes D1 to D4. The demodulation output terminal 14a of the first mixing unit 14 can be connected to the response-signal processing circuit 22 or a direct-current power supply 24 via a third switching unit 23.

In the structure described above, the first oscillator 13 generates the first signal (2.41 GHz), F1, and the second oscillator 15 generates the second signal (2.4 GHz), F2. The frequency (10 MHz) equal to the difference in frequency between the first and second signals is an exciting frequency for exciting the sensor 4 in the transponder 1.

The operation of an apparatus for sensing tire information according to an embodiment of the present invention is described below. Typical examples of tire information include information about tire pressure and tire temperature. For convenience of explanation, tire-pressure sensing is described. If tire temperature is sensed, the transponder 1 would include another sensor for it.

As shown in Fig. 3, an interrogation signal to be transmitted to the transponder 1 is divided into a transmission period Ta and a reception period Tb. In the transmission period Ta, the first switching unit 18 connects the first mixing unit 14 to the power combining circuit 16, and the second switching unit 19 connects the band-pass filter 12 to the power combining circuit 16. The direct-current power supply 24 applies power to the demodulation output terminal 14a of the first mixing unit 14 through the third switching unit 23.

The application of power by the direct-current power supply 24 brings the diodes D1 and D3 in the first mixing unit 14 into conduction, and the first signal output from the first oscillator 13 is sent to the power combining circuit 16 via the first mixing unit 14. The second signal output from the second oscillator 15 is input to the power combining circuit 16. If the first signal and the second signal input to the power combining circuit 16 have the same level, a combined signal (F1+F2) increased by 6 dB is output to the output terminal of the power combining circuit 16. The combined signal is transmitted to the transponder 1.

In the transponder 1, the combined signal (F1, F2) is mixed by the second mixing unit 3, a difference signal (10 MHz) which has a frequency equal to the difference in frequency between these signals is generated, and the difference signal excites the sensor 4. Then, the sensor 4 resonates with its self-resonant frequency, and the resonance state continues. Since this resonant frequency varies with variations in tire pressure, the resonant frequency represents information about tire pressure.

When the operation moves to the next reception period Tb, the first switching unit 18 disconnects the power combining circuit 16 from the first mixing unit 14, the second switching unit 19 disconnects the second switching unit 16 from the band-pass filter 12, and the first mixing unit 14 and the band-pass filter 12 are connected to each other via the bypassing line 17.

Then, only the first signal from the first oscillator 13 is transmitted to the transponder 1 and input to the second mixing unit 3. In the transponder 1, since the sensor 4 continues self resonance, a signal with its resonant frequency is also input to the second mixing unit 3. Therefore, the first signal is amplitude-modulated by the signal with the self-resonant frequency by the second mixing unit 3, and the AM wave is emitted from the antenna 2. The AM wave is received by the antenna 11 and input to the first mixing unit 14 via the bypassing line 17.

Shortly thereafter, the third switching unit 23 disconnects the first mixing unit 14 from the direct-current power supply 24, and the demodulation output terminal 14a is then connected to the response-signal processing circuit 22. Since the first signal from the first oscillator 13 is also input to the first mixing unit 14, the first mixing unit 14 operates as a synchronous detector (the frequency of the AM wave is the same as that of the first signal). A detection signal (10 MHz) obtained from the detection is output from the first mixing unit 14 and input to the response-signal processing circuit 22. The tire-pressure information processed by the response-signal processing circuit 22 is displayed on a display (not shown).

As described above, according to an embodiment of the present invention, the sensor 4 is excited by transmission of signals of two waves from the interrogator 10, without transmission of amplitude-modulated waves from the interrogator 10. Therefore, a spurious problem caused by distortion of the amplitude-modified waves is prevented. In addition, if the level of the signals becomes lower, the sensor 4 can be sufficiently excited. Furthermore, even if the first signal and the second signal have the same level and the level is 6 dB lower than the carrier level of a normal amplitude-modulated wave, a beat signal (signal having a frequency equal to the difference between the signals) having the same level as a modulation signal obtained from demodulation when all the transmitted wave is an AM wave is realized.

## Claims

1. An apparatus for sensing tire information including information about tire pressure, the apparatus comprising:
an interrogator for transmitting an interrogation signal to a vicinity of a tire of a vehicle in a transmission period and for receiving and processing a response signal including the tire information in a reception period; and
a transponder attached to the tire, the transponder including a sensor capable of being excited by a signal having a predetermined frequency, the sensor being used for sensing the tire information, the transponder being for sending the response signal to the interrogator in response to the interrogation signal in the reception period,
wherein the interrogator includes:
a first oscillator for outputting a first signal;
a second oscillator for outputting a second signal, the first signal and the second signal being used for constituting the interrogation signal, a frequency of the first signal being different from a frequency of the second signal by the predetermined frequency;
a power combining circuit for combining the first signal and the second signal; and
an antenna connectable to a combining output terminal of the power combining circuit,
wherein the transponder includes a second mixing unit for mixing the first signal and the second signal and outputting a difference signal having a frequency equal to a difference in frequency between the first signal and the second signal, and
wherein, in the transmission period, a combined signal of the first and second signals is transmitted.

2. The apparatus for sensing tire information according to Claim 1, further comprising:
a first mixing unit connected to an output side of the first oscillator;
a bypassing line for bypassing the power combining circuit;
a first switching unit for connecting one of a first input terminal of the power combining circuit and the bypassing line to the first mixing unit; and
a second switching unit for connecting one of the combining output terminal of the power combining circuit and the bypassing line to the antenna,
wherein, in the transmission period, inputting to the power combining circuit is performed via the first mixing unit, and
wherein, in the reception period, the response signal is input to the first mixing unit via the bypassing line, and the first signal is input to the first mixing unit.
